# EUROPEAN PATENT APPLICATION

(11) **EP 4 074 670 A1**
(43) Date of publication of application: **19.10.2022**
(21) Application number: 22020176.8
(22) Date of filing: 14.04.2022
(51) Int. Cl.: C04B 18/02, C04B 20/04, C04B 111/00

(54) **LIGHTWEIGHT FINE PARTICULATES PRODUCED MAJORLY FROM BIOMASS-COAL COMBUSTION FLY ASH**

(30) Priority: 16.04.2021 US 202163175691 P
(71) Applicant: Khan, Abbas, 08064 Zwickau (DE)
(72) Inventor: Khan, Abbas, 08064 Zwickau (DE)

(57) **Abstract**

The present invention discloses lightweight fine particulates composition, and a method of manufacturing the lightweight fine particulates majorly from biomass-coal fly ash (BCA) in combination with bauxite residue (BR), fly ash (FA), waste-to-energy ash (WTA), ceramic wastes (CW), glass wastes (GW), limestone wastes (LW), and mixtures thereof. The present invention relates to the manufacturing of lightweight fine particulates at high throughput and at very low manufacturing cost by using the raw materials which are inexpensive hence making the man-made lightweight fine particulates competitive. Moreover, the various raw materials used in the production of lightweight fine particulates could be hazardous in nature if left untreated, hence the present invention helps alleviate a waste disposal problem.

## Description

### FIELD OF THE INVENTION

The present invention relates primarily to fine particulates used generally as the building materials, and more particularly it relates to lightweight fine particulates and its composition, and method of manufacturing the lightweight fine particulate majorly from biomass-coal combustion fly ash in combination with other raw materials.

### BACKGROUND OF THE INVENTION

With increased awareness of climate change and the ongoing effort to reduce greenhouse gas emissions, solutions are sought for replacement of fossil fuels by renewable ones. Biomass is perceived as promising materials to produce energy, fuels, and chemicals. Typical biomass fuels for power generation include wood chips, sawdust bark, waste from wastewater treatment, tree trimmings, paper, cardboard, agricultural wastes, and sludges from paper mills, wastewater treatment, municipal sources, etc.

However, there are some disadvantages when using biomass alone for power generation such as supply, quantity, quality, consistency, and high moisture. These disadvantages can be reduced when cofired with coal. The great advantage for the coal-fired plant is that biomass cofiring reduces its net CO₂ emissions. In most cases, cofiring is one of the least costly methods for a coal-fired plant to achieve modest levels of CO₂ reductions. This advantage can be accomplished in a short time scale with little technical risk. In addition to reducing net CO₂ emissions, biomass cofiring enables coal plant to reduce SO₂ emissions as it contains less sulphur than coal. Biofuels also tend to contain less nitrogen and have volatile matter content than coal which results in lower NOx emissions. Another advantage is that cofiring diversifies the coal plant's fuel.

The use of biofuels for power generation varies considerably from country to country. Within OECD countries, Finland utilises the greatest proportion of biomass for power generation at 13.7% while Sweden, Germany, UK and USA accounts for 7.5%, 4.6%, 2.8% and 1.7%, respectively.

It has been found that during the combustion of coal-biomass blends with less than 20% biomass, aluminosilicates dominate in the ash. The addition of biomass can modify the ash composition from mullite-rich aluminosilicates typical for coal combustion into calcium aluminosilicates. The biomass ash from the medium-size boilers has high content of SiO2 which sometime can be up to 75wt% is partly due to the contamination of biomass with soil or ground material.

Co-combustion of biomass with coal can result in the production of fly ash differing it from fly ash obtained from coal combustion by a higher content of soluble fraction and higher amount of unburned carbon or char compared to coal-fired fly ash, which can be in the range of 5-20 wt%. Also, the ash from biomass-coal combustion has mixture of plasticized fly ash which is produced from burning coal and unplasticized fine-grained sandy material which is produced from burning biomass.

Due to above factors such as higher soluble fraction, high unburned char, sand material, and quality fluctuations, fly ash produced from biomass-coal combustion has so far limited utilization compared to fly ash produced from by coal fired power plants.

On the other hand, natural sand or fine particulates is the world's most consumed raw material after water and a necessity to our everyday lives. The shortage of natural sand or fine particulates has been reported all over the world since long time and as per climate scientists, it constitutes one of the greatest sustainability challenges of the 21st century. Enormous quantities of sand are being processed into construction material. The global demand for sand or fine particulates in the building and construction and other industries is increasing pressure on the dwindling natural sources of sand. The sources of fine particulates for this purpose are a) natural sand from nullahs, creeks and rivers and b) crushed stones or manufactured sand. However, these alternative sand sources are drastically changing the landscape, destroying natural habitats and endangering the ecosystem. Furthermore, the destructive practice of sand extraction or mining are making it an increasingly unsustainable raw material. Currently, 40 billion tonnes of sand consumed worldwide of which 30 billion tonnes are used in the concrete and mortars production. The extreme high consumption of sand has endangered coastal lines and 30 islands disappearance in the Southeast Asia.

Most recently, COVID-19 pandemic has even worsened the matter of sand shortage. Sand is used to make glass and vaccines are being stored in glass vials. As per the current reports, the world will need approximately two billion excess glass vials in the next two years itself. Scientists believe this will further escalate the global sand shortage.

There is a need to address the abovementioned two problems i.e., utilization of fly ash produced from the biomass-coal combustion and alternative to natural sand. One solution to aforesaid problems is upcycling biomass-coal combustion fly ash to lightweight fine particulates.

Various prior arts have been disclosed describing the production of building materials by incorporating the use of the hazardous industrial by-products. The prior art document US9938196B2 discloses a method for producing a lightweight ceramic aggregate, particularly from coal ash, where the raw material mixture of the total moisture content preferably below 20% by weight consisting of power station ashes originating from combusting coal, or ashes from combusting coal in a mixture with biomass ash, or ashes from co-combusting biomass with coal and phosphogypsum in an amount of up to 50% by weight, taken from dumps and/or from direct dump from a power station or a heat and power station. Nevertheless, the present application is differentiable in the way that the raw material in US9938196B2 consist of coal ash or biomass mixed with coal ash or co-combustion ash from biomass and coal combustion plus phosphogypsum which in total accounts for 50wt%. Whereas present invention is discussing about lightweight aggregates from Biomass-coal ash as major raw material i.e., 50-99wt%. Further the resultant product of present application conforms size gradation as per harmonized DIN 13139 (sand for mortars) and DIN EN 12620 (fine aggregates for concrete), while US9938196B2 is silent about product features such as particle size, bulk density etc.

The prior art EP2276714B1 discloses a method of producing carbonated articles that are suitable for use as construction material, such as artificial stones. The method comprising carbonation of a granular material, where the article is mainly carbonate bonded, which refers to the fact that the particles of the granular material are mainly bonded to one another by means of the carbonate phases formed. The carbonates that are formed by the carbonation reactions in methods of the invention hence compose the main binding phases. The granular material can comprise biomass ash, municipal solid waste incinerator (MSWI) bottom ash and fly ash.

Another prior art CN108640576A discloses a kind of super dense form lightweight concretes for building, are made of following majority raw materials according to parts by weight, comprising: 20~40 parts of stainless steel slag, 6~10 parts of biomass lime-ash, 30~40 parts of fly ash, 20~50 parts of bentonite, 10~30 parts of cement, fly ash binder 12~14, 25~40 parts of clinker, 50~80 parts of yellow ground and other additives and raw materials. The prior art provides a kind of novel coagulation soil increases the utilization rate of stainless-steel slag and biomass lime-ash.

Further prior art GB2550170A discloses a production of aggregates comprising air pollution control residue with a carbonatable substance. The prior art also relates to the production of aggregates comprising Portland cement and air pollution control residue, cement bypass dust or biomass ash. The prior art also relates to the production of aggregates comprising two or more carbonatable wastes.

Still, further prior art US8097220B2 discloses a method of making a body, comprising selection of a first ash source and a second ash source; and formation of the first and second ash sources into a formed body comprising at least 40% of the first and second ash sources; wherein a ratio of amounts of the first ash source to the second ash source is between 50% and 90% of the first ash source to between 10% and 50% of the second ash source. The first ash source includes at least one of a fly ash, a bottom ash, a municipal solid waste ash, and a biomass ash, and the second ash source includes at least one other of a fly ash, a bottom ash, a municipal solid waste ash, and a biomass ash.

The prior art by Wang et al. titled "biomass fly ash in concrete: Mixture proportioning and mechanical properties", published in Fuel, Volume 87, Issue 3, March 2008, Pages 365-371, discloses a replacement of cement by biomass fly ash in concrete within the concentration interest to commercial coal-biomass cofiring operations at power plants and blended biomass fly ash within a certain blending ratio should be considered in concrete.

Another paper prior art by Wang et al. titled "Comprehensive study of biomass fly ash in concrete: Strength, microscopy, kinetics and durability", published in Fuel Processing Technology, Volume 88, Issues 11-12, December 2007, Pages 1165-1170, discloses an investigation of the strength, microscopic study and durability of biomass fly ash concrete and kinetics of the mixture of biomass fly ash and calcium hydroxide, which concluded that biomass fly ash with cofiring concentration within the interest to commercial coal-biomass cofiring operations at power plants have equal or much better performances than those of coal fly ash.

Another paper prior art by Belviso et al. titled "State-of-the-art applications of fly ash from coal and biomass: A focus on zeolite synthesis processes and issues", published in Progress in Energy and Combustion Science, Volume 65, March 2018, Pages 109-135, discloses methods converting biomass coal fly ash to zeolites as a potential useful secondary product for various applications. However, the paper mainly focuses on the key factors affecting zeolite synthesis, primarily from coal fly ash; and analyses the drawbacks of each approach.

Moreover, the paper prior art by Sua-lam et al. titled "Utilization of coal- and biomass-fired ash in the production of self-consolidating concrete" published in Journal of Cleaner Production, Volume 100, 1 August 2015, Pages 59-76, discusses about the recycling of waste such as coal ash and biomass ash for the production of high-performance concrete, i.e., self-consolidating concrete (SCC). The paper also discloses an incorporation of four main by-products-fly ash (FA), bottom ash (BA), rice husk ash (RHA), and sugarcane bagasse ash (SBA)-into the production of SCC.

However, the above-mentioned prior arts neither apparently describe about nor they specifically oriented towards the lightweight fine particulates produced majorly from biomass-coal fly ash (BCA) and/or in combination with bauxite residue (BR), fly ash (FA), waste-to-energy ash (WTA), ceramic wastes (CW), Glass waste (GW), and limestone waste (LW), which is a key feature of the present invention. The above-mentioned prior arts are clearly differentiable from the present invention with respect to raw materials and method of manufacturing lightweight fine particulates.

Substitution of natural sand with lightweight fine particulates produced from different industrial wastes i.e., BCA, BR, FA, WTA, CW, GW and LW supports protection of these habitats where natural sand is sourced. Since major components in the present invention are waste by-products, the raw materials are inexpensive making the man-made lightweight fine particulates competitive and thus helps alleviate a waste disposal problem. Therefore, successful and economical manufacture of fine particulates from the mixture of waste by-products will not only reduce the impact of disposal problems disposals on the environment but also provide a great benefit to the economy.

### SUMMARY OF THE INVENTION

The primary objective of the present invention is to provide an engineered well-defined lightweight fine particulate and its composition, and an improved and simple method of manufacturing the lightweight fine particulates from combination of various hazardous industrial by-products and solid wastes.

Another objective of the present invention is to provide an alternative way of substituting natural sand with lightweight fine particulates manufactured from various hazardous industrial by-products and solid wastes i.e., BCA, BR, FA, WTA, CW, GW and LW.

Still another objective of the present invention is to suppress negative environmental impact addressed due to hazardous industrial by-products and solid wastes by upcycling them to produce lightweight fine particulates.

Further objective of the present invention is to alleviate a disposal problem of hazardous industrial by-products and solid wastes.

Still, further objective of the present invention is to manufacture lightweight fine particulates from the mixture of inexpensive waste by-products and raw materials which successively provides great economic benefits.

The present invention discloses an engineered well-defined lightweight fine particulate, as well as an improved and simple method of manufacturing the lightweight fine particulates from combination of various hazardous industrial by-products and solid wastes i.e., biomass-coal fly ash (BCA) in combination with at least one raw material selected from bauxite residue (BR), fly ash (FA), waste-to-energy ash (WTA), ceramic wastes (CW), glass wastes (GW), limestone wastes (LW), and mixture thereof. The majority raw material used is the biomass-coal fly ash (BCA). The present invention relates to the manufacturing of lightweight fine particulates at high throughput and at very low manufacturing cost by using the raw materials which are inexpensive hence making the man-made lightweight fine particulates competitive. Moreover, the various raw materials used in the production of lightweight fine particulates are hazardous in nature if left untreated, hence the present invention helps alleviate a waste disposal problem.

The present invention provides the method of manufacturing lightweight fine particulates comprising various steps i.e., mixing a primary raw material and a secondary raw material; spraying water into the high intensity shear-mixer to form granules; drying the granules; and sintering the dried granules at high temperature.

The primary raw material is the biomass-coal fly ash (BCA). The secondary raw materials and/or additives are selected from, the fly ash (FA), the bauxite residue (BR), the waste-to-energy ash (WTA), the ceramic wastes (CW), the glass wastes (GW), the limestone wastes (LW), and mixtures thereof. The binder used is bentonite.

The lightweight fine particulates of the present invention provides multifold benefits to the end users which are described in the following pages of specification.

### DETAILED DESCRIPTION OF THE INVENTION

The foregoing disclosure has broadly outlined the features and technical advantages of the present disclosure in order that the description of the disclosure that follows may be better understood. It should be appreciated by those skilled in the art that the conception and specific embodiment disclosed may be readily utilized as a basis for modifying or designing other structures for carrying out the same purposes of the present disclosure. It is to be understood that this invention is not limited to the specific devices, methods, conditions or parameters described and/or shown herein and that the terminology used herein is for the example only and is not intended to be limiting of the claimed invention. Also, as used in the specification including the appended claims, the singular forms 'a', 'an', and 'the' include the plural, and references to a particular numerical value includes at least that particular value unless the content clearly directs otherwise. Ranges may be expressed herein as from 'about' or 'approximately' another particular value when such a range is expressed another embodiment. Also, it will be understood that unless otherwise indicated, dimensions and material characteristics stated herein are by way of example rather than limitation and are for better understanding of sample embodiment of suitable utility, and variations outside of the stated values may also be within the scope of the invention depending upon the particular application.

It is to be understood that the term "comprises" and grammatical equivalents thereof are used herein to mean that other components, ingredients, steps, etc. are optionally present. For example, an article "comprising" (or "which comprises") components A, B, and C can consist of (i.e., contain only) components A, B, and C, or can contain not only components A, B, and C but also contain one or more other components.

It is to be also understood that the phraseology and terminology employed herein is for the purpose of description and not of limitation.

It is to be understood that the term "Biomass-coal fly ash (BCA)" hereinafter refers to a by-product produced during the burning of a mixture of biomass and hard or brown coal, having at least silica (28-67wt%), alumina (6-25 wt%), iron oxide (1-7 wt%), lime (3-22 wt%), aggregate sodium and potassium oxide (2-10 wt%) and Lol (2-12 wt%). BCA may need to screen to remove sandy and char materials before the granulation process. BCA can also be a desulphurized biomass-coal fly ash.

It is to be understood that the term "Fly ash (FA)" hereinafter refers to a by-product produced during the burning of hard or brown coal by thermal power plants, having at least rich silica (28-69wt%), alumina (6-26 wt%), iron oxide (3-24 wt%), lime (1-25 wt%) and Lol (2-10 wt%).

It is to be understood that the term "Bauxite residue (BR)" hereinafter refers to a by-product produced during the production of alumina from bauxite ore (Bayer process), having at least rich iron oxide (28-55 wt%), alumina (10-20 wt%), silica (7-14 wt%), titanium oxide (3-12 wt%), lime (3-14 wt%) and sodium oxide (2-9 wt%), and the term "bauxite residue" is not restricted to the type of bauxite ore used in the Bayer process.

It is to be understood that the term "Waste to energy ash (WTA)" hereinafter refers to ash which is derived from the incineration process during the burning of municipality solid wastes, having at least silica (20-40 wt%), alumina (6-20 wt%), iron oxide (1-7 wt%), lime (12-40 wt%), aggregate sodium and potassium oxide (2- 10 wt%) and Lol (2-12 wt%).

It is to be understood that the term "Glass waste (GW)" hereinafter refers to a finely grinded mixture of glass bottles, jars, table ware, flat glass, windows, etc. having at least silica >65wt%. The waste glass can either from soda-lime glass, borosilicate glass or the mixture of both soda-lime glass and borosilicate glass.

It is to be understood that the term "Ceramic waste (CW)" hereinafter refers to a finely grinded ceramic tiles or ceramic waste, having at least silica (32-69 wt%), alumina (14-40 wt%), iron oxide (2-10 wt%), lime (2-12 wt%), aggregate sodium and potassium oxide (4-12 wt%) and Lol (1-10 wt%).

It is to be understood that the term "Limestone waste (LW)" hereinafter refers to a finely grinded limestone waste, having at least 75 wt% combined CaO and MgO. The term "limestone waste" can also be the broadly used lime which refers to calcium-containing inorganic materials, in which carbonates, oxides and hydroxides of calcium, magnesium and silicon predominate.

In order to achieve a better understanding of the nature of the present invention, a preferred embodiment of lightweight fine particulates and method of manufacturing the lightweight fine particulates will now be explained.

According to a preferred embodiment of the present invention, the lightweight fine particulates manufactured by a composition comprising: a primary raw material which is biomass-coal fly ash in range of 90-99 wt%; and/or at least one secondary raw material selected from fly ash in range of 49-0 wt%, bauxite residue in range of 49-0 wt%, WTA in range of 8-0 wt%, glass wastes in range of 15-0 wt%, ceramic wastes in range 25-0 of wt%, limestone waste in range of 20-0 wt%, and mixtures thereof.

According to an embodiment of present invention, bentonite is added as a binder in the range of 10-1 wt%. Further, granules are formed using a high intensity shear-mixer by spraying water in the range of 12-28 wt%. The granules are dried between temperature ranges from 125-275 °C. The dried granules are sintered at high temperature in the range of about 950-1,250°C.

According to an embodiment of the present invention, a plurality of formulations is prepared using abovementioned raw materials, which are disclosed in Table 2. Table 2 shows the various formulations with the biomass-coal fly ash (BCA) as the primary raw material; and the fly ash (FA), the bauxite residue (BR), the waste-to-energy ash (WTA), the glass waste (GW), the ceramic waste (CW), the limestone waste (LW), and mixtures thereof, as the secondary raw materials.

According to one embodiment of the present invention, the biomass-coal fly ash is in the range of 90-99 wt%, and the bentonite is in the range of 10-1 wt%.

According to one embodiment of the present invention, the biomass-coal fly ash is in the range of 50-99 wt%, the fly ash is in the range of 49-0 wt%, and the bentonite is in the range of 10-1 wt%.

According to one embodiment of the present invention, the biomass-coal fly ash is in the range of 50-99 wt%; the fly ash is in the range of 49-0 wt%; at least one raw material selected from the WTA in the range of 8-0 wt%, the glass wastes in the range of 15-0 wt%, the ceramic wastes in the range of 25-0 of wt%, and the limestone waste in the range of 20-0 wt%; and the bentonite is in the range of 10-1 wt%.

According to one embodiment of the present invention, the biomass-coal fly ash is in the range of 50-99 wt%, the bauxite residue is in the range of 49-0 wt%, and the bentonite is in the range of 10-1 wt%.

According to one embodiment of the present invention, the biomass-coal fly ash is in the range of 50-99 wt%; the bauxite residue is in the range of 49-0 wt%; at least one raw material selected from the WTA in the range of 8-0 wt%, the glass wastes in the range of 15-0 wt%, the ceramic wastes in the range of 25-0 of wt%, and the limestone waste in the range of 20-0 wt%; and the bentonite is in the range of 10-1 wt%.

According to an embodiment of the present invention, the secondary raw materials can be added one after the other and mixed simulatneously before adding the next secondary raw material, or the secondary raw materials can be added together and mixed at same time. No specific sequence of adding the secondary raw materials is to be followed, unless other specified.

According to another embodiment of the present invention, a method of manufacturing lightweight particulates comprising the steps of:
i. mixing the primary raw material and at least one secondary raw material using the high intensity shear-mixer;
ii. spraying water into the high intensity shear-mixer to form the granules with sub-round shapes;
iii. drying the granules at temperature in range of 125-275 °C; and
iv. sintering the dried granules at high temperature in range of 950-1,250°C.

According to one embodiment of the present invention, the granules can be dried using a mesh belt dryer.

According to another embodiment of the present invention, the lightweight fine particulates produced by the abovementioned method having size range between, but not limited to, 0-6 mm. Further, the size of said lightweight fine particulates conforms to size gradation as per harmonized DIN EN 13139 (sand for plaster). Furthermore, the size of said lightweight fine particulates conforms to size gradation as per harmonized DIN EN 12620 (fine aggregates for concrete). In addition, the size of said lightweight fine particulates conforms to lightweight aggregates definition as per harmonized DIN EN 13055:2016.

Moreover, the lightweight fine particulates are characterized by means of the size gradation that is expressed by results of a sieve analyses as shown in below provided Table 1. The size gradation, or in other words, the distribution of particle sizes (size distribution), provides building material compositions, especially mortar and concrete compositions, that show better properties than those compositions that comprise normal sand instead of the lightweight fine particulates according to the present invention.

**Table 1**

| | | | | | | |
|---|---|---|---|---|---|---|
| Sieve size | 4.75mm | 2.36mm | 1.18mm | 600µm | 300µm | 150µm |
| Passing(mass %) | 90-100 | 80-100 | 50-95 | 25-85 | 5-70 | 0-10 |

According to another embodiment of the present invention, bulk density of said lightweight fine particulates is between, but not limited to, 720-1,180 kg/m³.

According to another embodiment of the present invention, particle density of said lightweight fine particulates is between, but not limited to, 1,300-2,200 kg/m³.

According to another embodiment of the present invention, water absorption of said lightweight fine particulates is between, but not limited to, 16-35 wt%.

According to another embodiment of the present invention, thermal conductivity of said lightweight fine particulates is between, but not limited to, 0.08-0.16 W/m*K.

According to another embodiment of the present invention, the lightweight fine particulates can be used as a secondary raw material in the building and construction such as in the production of concrete, mortars, roof tiles, tile adhesive, screed, etc.

### Experimental description

The below experimental details are provided to illustrate the working of the present invention, and it should not be construed to limit the scope of the present invention in any way.

The primary and secondary raw materials i.e., biomass-coal fly ash (BCA), fly ash (FA), bauxite residue (BR), waste-to-energy ash (WTA), ceramic wastes (CW), glass wastes (GW), and limestone wastes (LW) were procured from different power plants and factories in Europe. The formulations were prepared as recited in Table 2.

**Table 2**

| **For mula tion No.** | **Primary raw material** | **Secondary raw materials** | | | | | | **Binder** | **Total** (wt%) | **Water** (wt%) |
|---|---|---|---|---|---|---|---|---|---|---|
| | **BCA** (wt%) | **FA** (wt%) | **BR** (wt%) | **WTA** (wt%) | **GW** (wt%) | **CW** (wt%) | **LW** (wt%) | **Bentonite** (wt%) | | |
| **1** | 90-99 | | | | | | | 10-1 | **100** | 12-28 |
| **2** | 50-99 | 49-0 | | 8-0 | 15-0 | 25-0 | 20-0 | 10-1 | **100** | 12-28 |
| **3** | 50-99 | | 49-0 | 8-0 | 15-0 | 25-0 | 20-0 | 10-1 | **100** | 12-28 |

Thereafter, the primary raw material, the secondary raw materials, and the binder were mixed using the high intensity shear-mixer. The blending and mixing carried out for 1-3 mins. After mixing, water is sprayed into the mixer while a rotor and pan of mixer are running. The dryness of the mixture then results in low or high-water intake. The range of water input was in the range of 12-28wt%. The rotation is carried out for 3-8 minutes and during the rotation procedure, a plurality of granules/spheres is formed.

The moistened granules were then dried. The residence time of fine particulates in the dryer depends upon several factors such as water, dryer's length, drying temperature, drying duration and air flow. For the experiment, temperature of the dryer used in the range of about 125-275°C and drying duration was between 4-10 minutes.

The semi-dried particulates subsequently fired using rotary kiln. The residence time of sand particulates in the kiln depends on several factors such as kiln length, temperature of the kiln, type of the kiln etc. For the experiment, the temperature range was between 950 to 1250°C.

The lightweight fine particulates received from the kiln are typically below 6 mm in size. The bulk density of lightweight fine particulates is measured between 720-1,180 kg/m³. The particle density is in range of 1,300-2,300 kg/m³. The water absorption of lightweight fine particulates is measured between 16-28 wt% and the thermal conductivity is measured in the range of 0.08-0.16 W/m*K.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

The invention has been explained in relation to specific embodiment. It is inferred that the foregoing description is only illustrative of the present invention, and it is not intended that the invention be limited or restrictive thereto. Many other specific embodiments of the present invention will be apparent to one skilled in the art from the foregoing disclosure.

## Claims

1. A lightweight fine particulates composition consisting of hazardous industrial by-products and solid wastes, said composition comprising:
a primary raw material consisting of biomass-coal fly ash in the range of 90-99 wt%; and
at least one secondary raw material selected from fly ash in the range of 49-0 wt%, bauxite residue in the range of 49-0 wt%, waste-to-energy in the range of 8-0 wt%, glass wastes in the range of 15-0 wt%, ceramic wastes in the range 25-0 of wt%, limestone waste in the range of 20-0 wt%, and mixtures thereof.

2. The composition of claim 1, further comprises bentonite as a binder in the range of 10-1 wt%.

3. The composition of claim 1, wherein the biomass-coal fly ash is in the range of 90-99 wt%, and the bentonite is in the range of 10-1 wt%.

4. The composition of claim 1, wherein the biomass-coal fly ash is in the range of 50-99 wt%, the fly ash is in the range of 49-0 wt%, and the bentonite is in the range of 10-1 wt%.

5. The composition of claim 1, wherein the biomass-coal fly ash is in the range of 50-99 wt%; the fly ash is in the range of 49-0 wt%; at least one raw material selected from the WTA in the range of 8-0 wt%, the glass wastes in the range of 15-0 wt%, the ceramic wastes in the range of 25-0 of wt%, and the limestone waste in the range of 20-0 wt%; and the bentonite is in the range of 10-1 wt%.

6. The composition of claim 1, wherein the biomass-coal fly ash is in the range of 50-99 wt%, the bauxite residue is in the range of 49-0 wt%, and the bentonite is in the range of 10-1 wt%.

7. The composition of claim 1, wherein the biomass-coal fly ash is in the range of 50-99 wt%; the bauxite residue is in the range of 49-0 wt%; at least one raw material selected from the WTA in the range of 8-0 wt%, the glass wastes in the range of 15-0 wt%, the ceramic wastes in the range of 25-0 of wt%, and the limestone waste in the range of 20-0 wt%; and the bentonite is in the range of 10-1 wt%.

8. The composition of claim 1, further comprises water in the range of 12-28 wt% for a granulation step.

9. The composition of claim 1, wherein lightweight fine particulates produced by said composition having size in the range of 0-6 mm.

10. The composition of claim 1, wherein the lightweight fine particulates produced by said composition having bulk density in the range of 720 - 1,180 kg/m³.

11. The composition of claim 1, wherein the lightweight fine particulates produced by said composition having particle density in the range of 1,300 - 2,200 kg/m³.

12. The composition of claim 1, wherein the lightweight fine particulates produced by said composition having thermal conductivity in the range of 0.08 - 0.16 W/m*K.

13. The composition of claim 1, wherein the lightweight fine particulates produced by said composition conform to size gradation as per harmonized DIN EN 13139, DIN EN 12620, and DIN EN 13055:2016.

14. The composition of claim 1, wherein the lightweight fine particulates produced by said composition conform to size gradation via sieve analysis as given in Table 1.
| | | | | | | |
|---|---|---|---|---|---|---|
| Sieve size | 4.75mm | 2.36mm | 1.18mm | 600µm | 300µm | 150µm |
| Passing(mass %) | 90-100 | 80-100 | 50-95 | 25-85 | 5-70 | 0-10 |

15. The composition of claim 1, wherein the lightweight fine particulates produced by said composition employs a method which comprises steps of:
i. mixing the primary raw material and at least one secondary raw material using a high intensity shear-mixer;
ii. spraying the water into the high intensity shear-mixer to form granules with sub-round shapes;
iii. drying the granules at temperature in range of 125-275 °C; and
iv. sintering the dried granules at high temperature in range of 950-1,250°C, thereby to obtain the lightweight fine particulates.
